**Europäisches Patentamt**

**European Patent Office**

**Office européen des brevets**

(19)

(11) **EP 1 132 986 A2**

(12) **EUROPEAN PATENT APPLICATION**

(43) Date of publication:
**12.09.2001 Bulletin 2001/37**

(51) Int Cl.$^7$: **H01M 8/04**

(21) Application number: **01105662.9**

(22) Date of filing: **07.03.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **08.03.2000 JP 2000063852**

(71) Applicant: **TOYOTA JIDOSHA KABUSHIKI KAISHA**
**Aichi-ken 471-8571 (JP)**

(72) Inventors:
• **Sano, Seiji**
**Toyota-shi, Aichi-ken, 471-8571 (JP)**

• **Hamada, Hitoshi**
**Toyota-shi, Aichi-ken, 471-8571 (JP)**
• **Tsugane, Takahide**
**Toyota-shi, Aichi-ken, 471-8571 (JP)**
• **Matsumoto, Shinichi**
**Toyota-shi, Aichi-ken, 471-8571 (JP)**

(74) Representative:
**Leson, Thomas Johannes Alois, Dipl.-Ing.**
**Patentanwälte**
**Tiedtke-Bühling-Kinne & Partner,**
**Bavariaring 4**
**80336 München (DE)**

(54) **Fuel cell system and method for operating fuel cell**

(57)     A fuel cell system calculates a water quantity $Qw$ produced by a fuel cell (30) from an output current $I$ of the fuel cell (30)(S102), and at the same time calculates saturated water vapor contents $Qwa$ and $Qwc$ in exhaust gases based on exhaust-gas flow rates $Qa$ and $Qc$, exhaust-gas pressures $Pa$ and $Pc$, and exhaust-gas temperatures $Ta$ and $Tc$ of the anode side and the cathode side, respectively (S106). Then the system calculates a water quantity control ratio that is defined as $t = Qw / (Qwa + Qwc)$ (S108) and controls operation of the fuel cell (30) by controlling one or more of the exhaust-gas flow rates $Qa$ and $Qc$, the exhaust-gas pressures $Pa$ and $Pc$, the exhaust-gas temperatures $Ta$ and $Tc$, and a current $I$ of the anode side and the cathode side in a direction such that a deviation $\Delta t$ between the water quantity control ratio $t$ and a value of one is canceled out (S112). By this control, the fuel cell (30) can be operated with excellent performance, without humidifying gases of the anode side and the cathode side.

# F I G. 3

```
          ┌──────────────────────────────┐
          │  OPERATION CONTROL ROUTINE   │
          └──────────────────────────────┘        S100
                         │
   ┌─────────────────────────────────────────────┐
   │  INPUT EXHAUST-GAS FLOW RATES Qa AND Qc      │
   │  INPUT EXHAUST-GAS PRESSURES Pa AND Pc       │
   │  INPUT EXHAUST-GAS TEMPERATURES Ta AND Tc    │
   │  INPUT CURRENT  I                            │
   └─────────────────────────────────────────────┘
                         │
   ┌─────────────────────────────────────────────┐
   │  CALCULATE PRODUCT WATER QUANTITY            │   S102
   └─────────────────────────────────────────────┘
                         │
   ┌─────────────────────────────────────────────┐
   │  CALCULATE SATURATED WATER                   │   S104
   │  VAPOR PRESSURE Pwa AND Pwc                  │
   └─────────────────────────────────────────────┘
                         │
   ┌─────────────────────────────────────────────┐
   │  CALCULATE SATURATED WATER                   │   S106
   │  VAPOR CONTENT IN EXHAUST                    │
   │  GAS Qwa AND Qwc                             │
   └─────────────────────────────────────────────┘
                         │
   ┌─────────────────────────────────────────────┐
   │  CALCULATE WATER QUANTITY                    │   S108
   │  CONTROL RATIO t                             │
   └─────────────────────────────────────────────┘
                         │
   ┌─────────────────────────────────────────────┐
   │           Δt = t − 1                         │   S110
   └─────────────────────────────────────────────┘
                         │
   ┌─────────────────────────────────────────────┐
   │  CONTROL OPERATION IN A                      │   S112
   │  DIRECTION SUCH THAT Δt IS                   │
   │  CANCELED OUT                                │
   └─────────────────────────────────────────────┘
                         │
                ┌──────────────┐
                │    RETURN     │
                └──────────────┘
```

**Description**

BACKGROUND OF THE INVENTION

1. Field of the Invention

The invention relates to a fuel cell system and a method for operating a fuel cell, and specifically to a polymer electrolyte fuel cell and a method-for operating a polymer electrolyte fuel cell.

2. Description of the Related Art

A polymer electrolyte fuel cell system is disclosed in Japanese Patent Laid-open Publication No. Hei 11-31520. The fuel cell system disclosed in that publication obviates the need for a device for humidifying a gas that is supplied to the cathode side of the fuel cell by controlling the operating temperature of the fuel cell to be approximately 70°C. It is often the case that the polymer electrolyte fuel cell uses a polymer electrolyte membrane having excellent proton (hydrogen ion) conductivity in humid conditions, and water concentration of the solid polymer electrolyte membrane affects performance of the fuel cell directly.
Therefore, an anode gas and a cathode gas both supplied to the fuel cell are often humidified with humidifiers. In the above-mentioned fuel system, the fuel cell is operated at a temperature of 50 to 80°C, preferably at a temperature of 60 to 70°C, and thereby the need for the humidifier at the cathode side is eliminated.
However, in the above-described fuel cell system, although the humidifier at the cathode side can be dispensed with, a humidifier at the anode side is still necessary, which makes it difficult to make the system sufficiently compact and low cost. Moreover, with the above-mentioned system, the fuel cell needs to be operated at a temperature of 50 to 80°C, preferably at a temperature of 60 to 70°C. As a result, this system cannot respond adequately when the fuel cell cannot be operated at the optimum temperature range, such as at start-up of the system and during transition.

SUMMARY OF THE INVENTION

It is one of the objects of a fuel cell system and a method for operating a fuel cell according to the invention to obviate the need for a humidifier at the anode side as well as a humidifier at the cathode side. Moreover, it is another object of a fuel cell system and a method for operating a fuel cell according to the invention to operate a fuel cell without humidifying gases, even at start-up of the system and during transition.
To achieve at least one of the foregoing objects, a fuel cell system according to a first aspect of the invention comprises water quantity detection means for detecting a quantity of water produced by the fuel cell; exhaust-gas saturated water vapor content detection means for detecting a saturated water vapor content in an exhaust gas of the fuel cell; water quantity control ratio calculation means for calculating a water quantity control ratio that is defined as a ratio of the water quantity detected by the water quantity detection means to the saturated water vapor content in the exhaust gas detected by the exhaust-gas saturated water vapor content detection means; and operation control means for controlling operation of the fuel cell so that the calculated water quantity control ratio is within a predetermined range.
In this fuel cell system that is the first aspect according to the invention, the water quantity control ratio calculation means calculates a water quantity control ratio defined as a ratio of the quantity of water produced by the fuel cell to the saturated water vapor content in the exhaust gas of the fuel cell, and the operation control means controls the operation of the fuel cell so that this calculated water quantity control ratio is within a predetermined range.
With this type of fuel cell system according to the invention, by operating the fuel cell so that the water quantity control ratio is within a predetermined range, the fuel cell can be operated without humidifying the cathode gas and the anode gas. Moreover, because the water quantity control ratio does not depend only on the temperature of the exhaust gas, this system is able to respond at start-up of the system and during transition. Here, "exhaust gas of the fuel cell" means both the exhaust gas of the cathode side and the exhaust gas of the other side. In the first fuel cell system of the invention as configured like this, the water quantity detection means can also detect the quantity of water based on an output current of the fuel cell. Moreover, in the first fuel cell system of the invention, the exhaust-gas saturated water vapor content detection means can calculate the saturated water vapor content in the exhaust gas based on a pressure of the exhaust gas, a temperature of the exhaust gas, and a flow rate of the exhaust gas.
A fuel cell system according to a second aspect of the invention comprises exhaust-gas relative humidity detection means for detecting relative humidity of the exhaust gas; and operation control means for controlling the operation of the fuel cell so that the water quantity control ratio specified as the detected relative humidity is within a predetermined range.
In this second fuel cell system according to the invention, the operation control means controls the operation of the fuel cell so that the water quantity control ratio specified as the relative humidity of the exhaust gas of the fuel cell detected by the exhaust-gas relative humidity detection means is within a predetermined range. With this type of second fuel cell system according to the invention, the fuel cell is able to be operated without the cathode gas and the anode gas being humidified, by operating the fuel cell so that the water quantity control ratio specified as the relative humidity of the exhaust gas is within a predetermined range. Moreover, since the relative humidity of the exhaust gas does not depend only on the temperature of the exhaust gas, the system can respond even at start-up of the system and during transition. Here, "relative humidity" is a ratio of a water vapor content and a saturated water vapor content in the exhaust gas at the temperature of the exhaust-gas. And, "exhaust gas of the fuel cell" means both the exhaust gas of the cathode side and the exhaust gas of the anode side.

In these first and second fuel cell systems of the present system, the operation control system controls the fuel system so that the water quantity control ratio is: (1) within a range that includes a value of 1 as the predetermined range; (2) within a range of 0.7 to 1.4 as the specified range; or so that (3) the water quantity control ratio is equal to a value of 1.

Furthermore, the first or second fuel cell system of the invention may comprise condition alteration means for altering at least one condition among the flow rate of the exhaust gas, the pressure of the exhaust gas, the temperature of the exhaust gas, and the output current of the fuel cell as operating conditions of the fuel cell. The operation control means alters at least one condition among the above-mentioned flow rate of the exhaust gas, the pressure of the exhaust gas, the temperature of the exhaust gas, and the output current of the fuel cell so that the water quantity control ratio is within the predetermined range. Since the water quantity control ratio depends on the flow rate of the exhaust gas, the pressure of the exhaust gas, the temperature of the exhaust gas, and the output current of the fuel cell, the water quantity control ratio can be controlled by altering at least one of these conditions, such that the fuel cell can be operated without humidifying both the cathode gas and the anode gas.

A fuel cell system according to a third aspect of the invention comprises water quantity detection means for detecting the quantity of water produced by the fuel cell; exhaust-gas water vapor content detection means for detecting the water vapor content in the exhaust gas of the fuel cell; and abnormality judgment means for judging an abnormality of the fuel cell system based on the water quantity detected by the water quantity detection means and the water vapor content in the exhaust gas detected by the exhaust-gas water vapor content detection means.

In this third fuel cell system according to the invention, the abnormality detection means detects the abnormality of the fuel cell system based on the quantity of water produced by the fuel cell that is detected by the water quantity detection means and the water vapor content in the exhaust gas of the fuel cell that is detected by the exhaust-gas water vapor content detection means. This judgment is conducted on the basis that when the fuel cell is operated without humidifying both the cathode gas and the anode gas, the quantity of water and the water vapor content in the exhaust gas become almost equal to each other. The third fuel cell system according to the invention as configured like this enables an abnormality of a fuel cell system to be judged.

In the third fuel cell system of the invention as configured like this, the abnormality judgment means can also judge an abnormality when a deviation between the water quantity and the water vapor content in the exhaust gas is not within the predetermined range.

Moreover, the third fuel cell system of the invention may be provided with alarm output means for outputting an alarm when the abnormality judgment means judges an abnormality of the fuel cell system. Providing such means enables the operator to promptly recognize an abnormality of the fuel cell.

A method for operating a fuel cell that is another aspect according to the invention is a method whereby the fuel cell is operated so that the water quantity control ratio defined as a ratio of the water quantity produced in the fuel cell to the saturated water vapor content in the exhaust gas of the fuel cell is within a predetermined range.

According to this method for operating a fuel cell of the invention, the fuel cell can be operated without humidifying the cathode gas and the anode gas. Moreover the water quantity control ratio does not depend only on the temperature of the exhaust gas, thereby enabling the system to respond at start-up thereof and during transition. Here, "exhaust gas of the fuel cell" means both the exhaust gas of the cathode side and the exhaust gas of the anode side.

In a method for operating a fuel cell according to yet another aspect of the invention, the fuel cell is operated so that the water quantity control ratio specified as the relative humidity of the exhaust gas of the fuel cell is within a predetermined range.

According to this second method for operating a fuel cell of the invention, the fuel cell can be operated without humidifying the cathode gas and the anode gas. Moreover, since the relative humidity of the exhaust gas does not depend on only the temperature of the exhaust gas, the system is able to respond at start-up thereof and during transition. Here, "exhaust gas of the fuel cell" means both the exhaust gas of the cathode side and the exhaust gas of the anode side.

In these methods for operating a fuel cell of the invention, it is also possible to control the water quantity control ratio to be within a range of 0.7 to 1.4 or to a value of 1.

BRIEF DESCRIPTION OF THE DRAWINGS

FIG. 1 is a block diagram showing an outline of a fuel cell system 20 according to one embodiment according to the invention.

FIG. 2 is a block diagram showing an outline of a cell 31 comprising a fuel cell 30.

FIG. 3 is a flowchart showing one example of an operation control routine of the fuel cell 30 that is executed by an electronic control unit 60 of the fuel cell system 20 of the embodiment.

FIG. 4 is a graph showing one example of a relation of the water quantity control ratio t and the voltage generated at the fuel cell 30 when a current density of the fuel cell 30 is controlled to a constant value (0.5 A/cm$^2$).

FIG. 5 is a graph showing one example of a relation of the water quantity control ratio t and a current I when exhaust-gas pressure Pa, saturated water vapor pressure Pwa, and exhaust-gas flow rate Qa are fixed.

FIG. 6 is a graph showing one example of a relation of the water quantity control ratio t and the exhaust-gas flow rate Qa when the current I, the exhaust-gas pressure Pa, and the saturated water vapor pressure Pwa are fixed.

FIG. 7 is a graph showing one example of a relation of the water quantity control ratio t and the exhaust-gas pressure Pa when the current I, the saturated water vapor pressure Pwa, and the exhaust-gas flow rate Qa are fixed.

FIG. 8 is a graph showing one example of a relation of the water quantity control ratio t and a exhaust-gas temperature Ta when the current I, the exhaust-gas pressure Pa, and the exhaust-gas flow rate Qa are fixed.

FIG. 9 is an explanatory view showing one example of a relation of the current density and the voltage generated when the fuel cell 30 was started while the water quantity control ratio t was maintained at a value of 1.

FIG. 10 is a block diagram showing an outline of the configuration of a fuel cell system 20B of a second embodiment.

FIG. 11 is a flowchart showing one example of an operation control routine of the fuel cell 30 that is executed by the electronic control unit 60 of the fuel cell system 20B of the second embodiment.

FIG. 12 is a flowchart showing one example of an abnormality judgment processing routine that is executed by the electronic control unit 60 of the fuel cell system 20 of the first embodiment or the fuel cell system 20B of the second embodiment.

DETAILED DESCRIPTION OF PREFERRED EMBODIMENTS

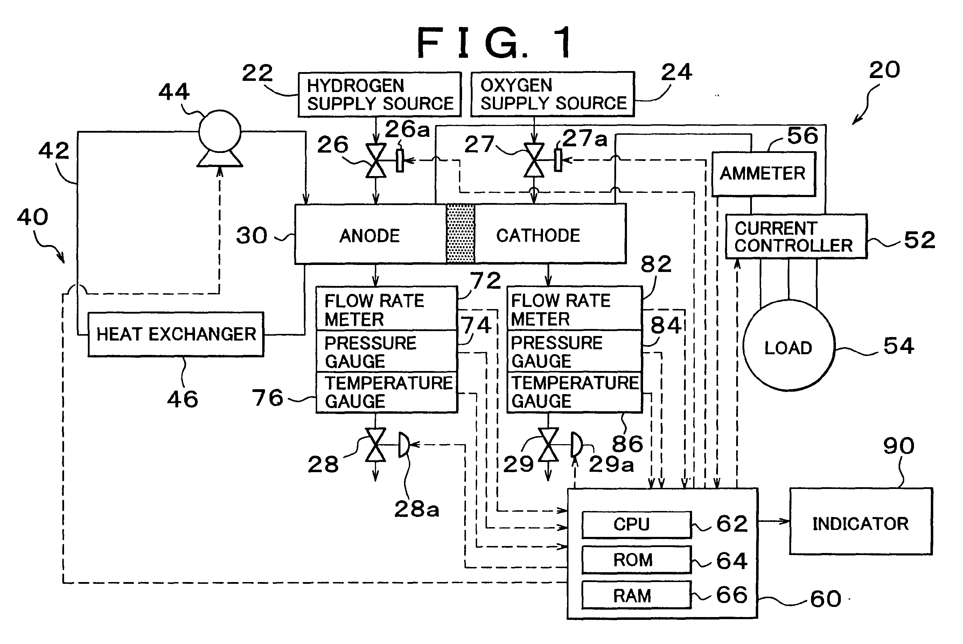

Next, implementation of the invention will be described with reference to the illustrated embodiments. FIG. 1 is a block diagram showing an outline of the configuration of a fuel cell system 20 which according to one embodiment of the invention. The fuel cell system 20 of the embodiment comprises, as shown in the figure a polymer electrolyte fuel cell system 30 that generates electricity using hydrogen from a hydrogen supply source 22 and oxygen from an oxygen supply source 24 as fuel; a cooling device 4 for cooling this fuel cell 30; a load 54 that is driven by electric power from the fuel cell 30; and an electronic control unit 60 for controlling the entire system.

The hydrogen supply source 22 is a supply source capable of supplying a hydrogen-containing gas that includes hydrogen to the fuel cell 30, such as, for example, a hydrogen tank filled with hydrogen and a reformer that generates a hydrogen-rich gas by steam-reforming methanol. The oxygen supply source 24 is a supply source capable of supplying an oxygen-containing gas to the fuel cell 30, such as, for example, a blower for supplying air as the oxygen-containing gas. It should be noted that the fuel cell system 20 of the embodiment is not provided with humidifiers for humidifying the hydrogen-containing gas from the hydrogen supply source 22 and the oxygen-containing gas from the oxygen supply source 24.

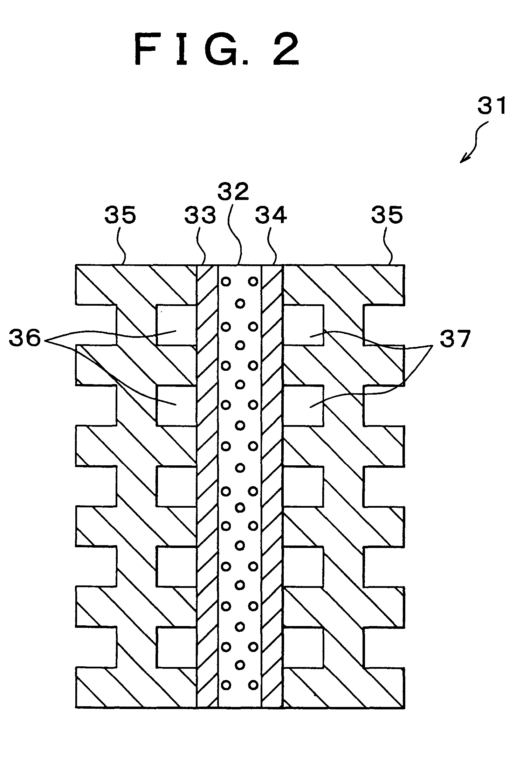

The fuel cell 30 is a polymer electrolyte fuel cell formed by stacking a plurality of cells 31. An outline of the configuration of the cell 31 that is a constituent of the fuel cell 30 is shown in FIG. 2. The cell 31, as shown in the figure, comprises an electrolyte membrane 32, an anode 33, a cathode 34, and two separators 35. The electrolyte 32 is a proton-conductivity membrane body formed of a polymer material such as fluorocarbon polymers. The anode 33 and the cathode 34 are gas diffusion electrodes. Further, the anode 33 and the cathode 34 are made of a carbon cloth into which is kneaded a catalyst of either platinum or an alloy of platinum and another metal, and sandwich the electrolyte membrane 32 with the faces into which the catalyst was kneaded so as to form a sandwich construction. The separators 35 are disposed so as to sandwich the sandwich construction made of the anode 33 and the cathode 34 and at the same time make passages 36 and 37 for the hydrogen-containing gas and the oxygen-containing gas together with the cathode 33 and the anode 34. In addition, the separator 35 serves as a partition wall between adjacent cells 31. Although not shown in the figure, a passage for a cooling medium for cooling the fuel cell 30 is also provided in the cell 31.

A feed rate of the hydrogen-containing gas from the hydrogen supply source 22 to the fuel cell 30 and a feed rate of the oxygen-containing gas from the oxygen supply source 24 to the fuel cell 30 can be adjusted with flow rate control valves 26 and 27, respectively. Gas pressures inside the fuel cell 30 can be adjusted with pressure control valves 28 and 29 attached on the exhaust gas sides thereof, respectively. Thus, when the hydrogen-containing gas is supplied to the passage 36 from the hydrogen supply source 22 while at the same time the oxygen-containing gas is supplied to the passage 37 from the oxygen supply source 24, electrode reactions expressed by the following formulas (1) and (2) take place at the anode 33 and at the cathode 34 to convert the chemical energy into electric energy.

$$\text{Anode: } H_2 \rightarrow 2H^+ + 2e^- \qquad (1)$$

$$\text{Cathode: } 2H + 2e^- + (1/2)O_2 \rightarrow H_2O \qquad (2)$$

A cooling device 40 is provided with a circulatory passage 42, a circulating pump 44, and a heat exchanger 46. The circulatory passage 42 is connected to a passage for the cooling medium (for example, water) provided in the cell 31 of the fuel cell 30 to allow the cooling medium to circulate. The circulating pump 44 makes the cooling medium circulate inside the circulatory passage 42. The heat exchanger 46 cools the cooling medium with outside air. Heat generated in the fuel cell is dissipated to the outside air through the use of the cooling medium, so that the fuel cell 30 is thermoregulated. Note that thermoregulation of the fuel cell 30 is conducted by controlling the flow rate of the cooling medium that is to be circulated by the circulating pump 44.

The load 54 is connected to an output terminal of the fuel cell 30 through the intermediary of a current controller 52 and driven by electric power generated by the fuel cell 30. In the embodiments, the load 54 includes a drive apparatus such as an electric motor as well as secondary cells and the like. The current controller 52 is a circuit that can control the current applied to the load 54, which alters the current value in response to a control signal from the electronic control unit 60.

The electronic control unit 60 is constructed as a microprocessor whose main constituent member is a CPU 62, and that comprises, in addition to the CPU 62, a ROM 64 in which a processing program has been stored, RAM 66 for temporarily storing data, and input and output ports (not shown in the figure). To the electronic control unit 60 are inputted an exhaust-gas flow rate Qa, an exhaust-gas pressure Pa, and an exhaust-gas temperature Ta of the anode side from a flow rate meter 72, output from a pressure gauge 74, and a temperature gauge 76 which are provided on exhaust gas piping of the anode 33 side of the fuel cell 30; an exhaust-gas flow rate Qc, an exhaust-gas pressure Pc, and an exhaust-gas temperature Tc of the cathode side from a flow rate meter 82, output from a pressure gauge 84, and a temperature gauge 86 which are provided on exhaust gas piping of the cathode 34 side; and a current I from an ammeter 56 attached to an output terminal of the fuel cell 30, etc., through input ports. Moreover, from the electronic control unit 60 are outputted: a driving signal to the circulating pump 44; driving signals to actuators 26a and 27a of flow rate control valves 26 and 27; driving signals to actuators 28a and 29a of gas pressure control valves 28 and 29; a control signal to a current controller 52; and a lighting signal to an indicator 90, etc., through output ports.

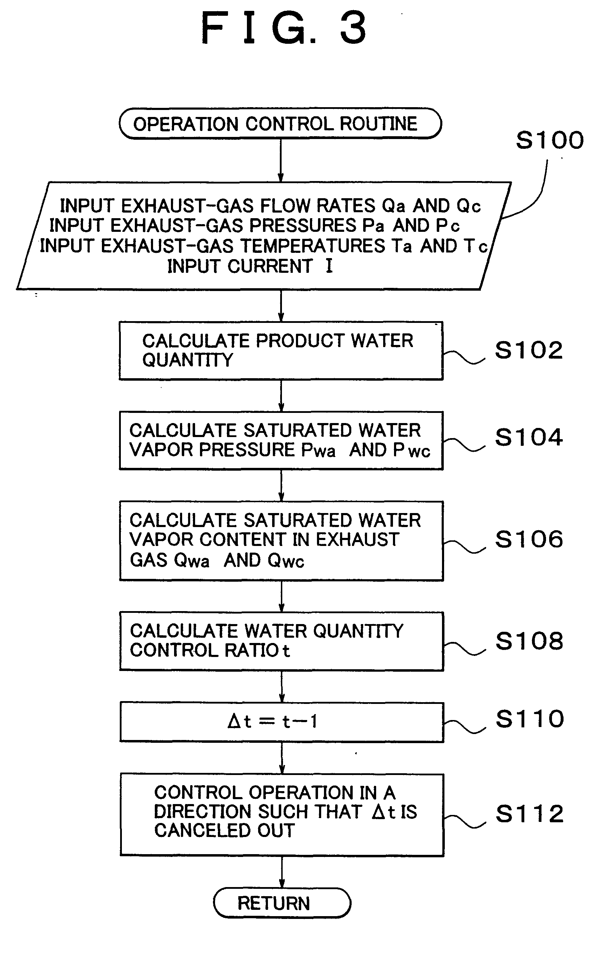

Next, operation of the fuel cell system 20 of the embodiment as configured in this way, and more particularly operating action of the fuel cell 30, will hereinafter be described. FIG. 3 is a flowchart showing one example of an operation control routine of the fuel cell 30 that is executed by an electronic control unit 60 of the fuel cell system 20 of the embodiment. This routine is repeatedly executed at predetermined intervals (for example, every 100 msec) after the fuel cell 30 has been started.

When this operation control routine is executed, the CPU 62 of the electronic control unit 60 first executes processing for reading the following: the exhaust-gas flow rates Qa and Qc from the flow rate meters 72 and 82; the exhaust-gas pressures Pa and Pc from pressure gauges 74 and 84; the exhaust-gas pressure temperatures Ta and Tc from the temperature gauges 76 and 86; the current I from the ammeter 56 (Step S100). Then, from readout current I, the CPU calculates the quantity of water that is produced by the fuel cell 30 for a unit time, namely the water quantity Qw, according to the following formula (3) (Step S102), wherein "F" in the formula (3) denotes Faraday constant:

$$Qw = I / 2F \qquad (3)$$

Next, the CPU 62 calculates saturated water vapor pressures Pwa and Pwc of the anode side and the cathode side, respectively, according to the next formula (4) using the readout exhaust-gas temperatures Ta and Tc (Step S104), and calculates saturated water vapor contents Qwa and Qwc in the exhaust gases of the anode side and of the cathode side, respectively, according to the formula (5) using the obtained saturated water vapor pressures Pwa and Pwc and the readout exhaust-gas flow rates Qa and Qc and exhaust-gas pressures Pa and Pc (Step S106). Note that Pw(a, c) in the formula (4) represents Pwa or Pwc, each denoting the saturated water vapor pressure and T(a, c) represents Ta or Tc, each denoting the exhaust-gas pressure, respectively. Moreover, Qw(a, c) in the formula (5) represents Qwa or Qwc, each denoting the saturated water vapor content in the exhaust gas and Q(a, c) represents Qa or Qc, each denoting the exhaust-gas flow rate, respectively.

$$Pw(a, c) = 0.4552 - 0.0004757(T(a, c) - 160) -$$

$$0.000000685(T(a, c) - 160)^2 \qquad (4)$$

$$Qw(a, c) = (Pw(a, c) / (P(a, c) - Pw(a, c)) \times Q(a, c) \qquad (5)$$

Consequently, the CPU 62 calculates a water quantity ratio t according to the next formula (6) using the water quantity Qw calculated in Step S102 and the saturated water vapor contents Qwa and Qwc in the exhaust gases of the anode side and of the cathode side calculated in Step S106, respectively, (Step S108), and a deviation $\Delta t$ between the water quantity control ratio t and a value of 1 (Step S110). Then, the CPU 62 controls the operation of the fuel cell 30 in a direction such that the deviation $\Delta t$ is canceled out (Step S112), and terminates this routine. A relation between the water quantity control ratio t and the operation of the fuel cell 30 will be described below.

$$t = Qw / (Qwa + Qwc) \qquad (6)$$

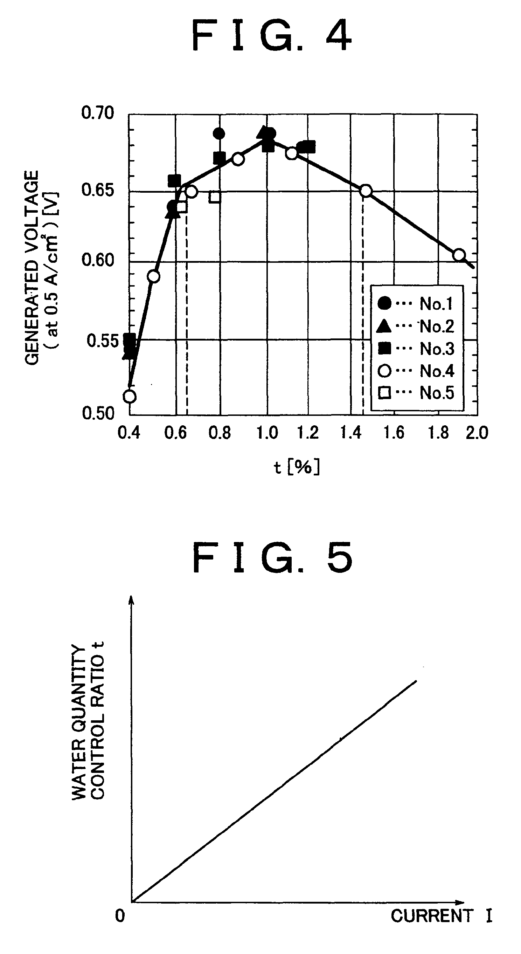

FIG. 4 is a graph showing one example of a relation of the water quantity control ratio t and the voltage generated at the fuel cell 30 when a current density of the fuel cell 30 is controlled to a constant value (0.5 A/cm$^2$). In the figure, symbols No. 1 to No. 5 denote experimental results in the following Table 1. That is, the graph of FIG. 4 indicates data obtained by the experiment carried out under the predetermined conditions shown in Table 1. More specifically, from the experimental data shown in the graph of FIG. 4, although each experiment was done according to a unique set of separate experimental conditions, it is evident that there exists a predetermined relation between the water quantity control ratio t and the generated voltage of the fuel cell 30. Each experiment in Table 1 was carried out using an ion-exchange membrane of a thickness of 30μm as the electrolyte membrane 32 for the anode 33 and the cathode 34 whose catalyst quantities were adjusted to be 0.3 mg/cm$^2$ and 0.5 mg/cm$^2$, respectively, while the fixed factors in the right column of the table were set. Each of the operating factors was varied within an appropriate range, and after 30 minutes passed the data was acquired. For example, in the experiment No. 1, the fixed factors were set as follows: the hydrogen flow rate at 54 cc/min, the operating temperature at 80°C, the gas pressure at 1 kg/cm$^2$, while the air flow rate was sequentially varied from 150 cc/min to 420 cc/min. As shown in the graph of FIG. 4, in experiment No. 1, five data points were obtained for the water quantity ratio t in a range of 0.4 to 1.2. Data was obtained in a similar manner for experiments No. 2 to No. 5.

Table 1

| Experiment No. | Operating factors | Fixed factors |
|---|---|---|
| 1 | Air flow rate (150→420 cc/min) | Hydrogen flow rate 54 cc/min Operating temperature 80°C Gauge pressure 1 kg/cm$^2$ |
| 2 | Hydrogen flow rate (54→300 cc/min) | Air flow rate 150 cc/min Operating temperature 80°C Gauge pressure 1 kg/cm$^2$ |
| 3 | Air flow rate (400→1150 cc/min) | Hydrogen flow rate 54 cc/min Operating temperature 60°C Gauge pressure 1 kg/cm$^2$ |
| 4 | Operating temperature (60→80°C) (60→50°C) | Hydrogen flow rate 54 cc/min Air flow rate 420 cc/min Gauge pressure 1 kg/cm$^2$ |
| 5 | Air flow rate (180→340 cc/min) | Hydrogen flow rate 54 cc/min Operating temperature 80°C Gauge pressure 0.5 kg/cm$^2$ |

As shown in the graph of FIG. 4, for several different operating conditions of the fuel cell 30, a relation shown in the graph of FIG. 4 was obtained for the relation of the water quantity control ratio t and the generated voltage. In this relation, at a region for the water quantity control ratio t equal to or less than 0.6, the performance of the fuel cell 30 decreased rapidly. Considering the definition of the water quantity control ratio t, it is thought that this is due to drying of the electrolyte membrane 32. On the other hand, the performance of the fuel cell 30 declined when the water quantity control ratio t exceeded 1.4. It is thought that this is due to over-humidification of the electrolyte membrane 32. Therefore, if the fuel cell 30 is operated so that the water quantity control ratio t thereof falls within a range of 0.7 to 1.4, excellent cell performance can be ensured. Especially, if the fuel cell 30 is operated so that the water quantity control ratio t is equal to a value of 1, the fuel cell can be operated in a high performance operating state. Described above is the reason for operating the fuel cell 30 so as to be controlled in a direction such that the deviation Δt between the water quantity control ratio t and a value of 1 is canceled out at Steps S110 and S112 in the operation control routine of FIG. 3. Next, an actual operation control will be described.

Now, supposing that the anode side and cathode side are operated under completely identical conditions, that is, supposing that Qa = Qc, Pa = Pc, and Ta = Tc, then Pwa = Pwc. Under this assumption, by substituting formula (3) and formula (5) into formula (6), the water quantity control ratio t is expressed by formula (7):

$$t = I / 2F \times (Pa + Pwa) / 2Pwa \times Qa \tag{7}$$

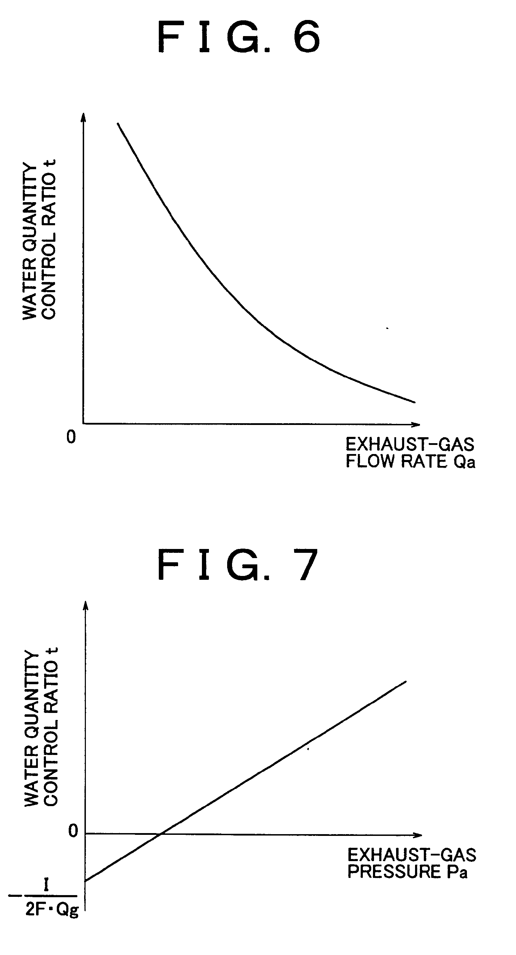

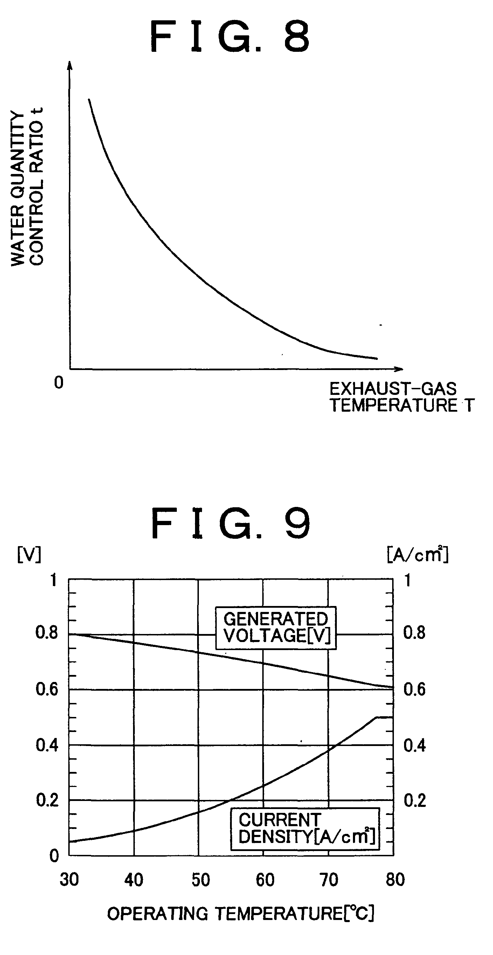

From this relation, it can be seen that, if the saturated water vapor pressure Pwa and the exhaust-gas flow rate Qa are fixed, the water quantity control ratio t is proportionate to the current I, and hence a relation of the water quantity control ratio t and the current I as illustrated in FIG. 5 is obtained. Further, if the current I, the exhaust-gas pressure ·Pa, and the saturated water vapor pressure Pwa are fixed, the water quantity control ratio t is inversely proportionate to the exhaust-gas flow rate Qa, and hence a relation of the water quantity control ratio t and the exhaust-gas flow rate Qa as illustrated in FIG. 6 is obtained. Moreover, if the current I, the exhaust-gas pressure Pa, and the exhaust-gas flow rate Qa are fixed, the water quantity control ratio t is proportionate to the exhaust-gas pressure Pa, and hence a relation of the water quantity control ratio t and the exhaust-gas pressure Pa as illustrated in FIG. 7 is obtained. If the current I, the exhaust-gas pressure Pa, and the exhaust-gas flow rate Qa are fixed, the water quantity control ratio t is inversely proportionate to the saturated water vapor pressure Pwa. Since the saturated water vapor pressure Pwa is a quadratic function of the exhaust-gas temperature Ta, the water quantity control ratio t becomes inversely proportional to the cube of the exhaust-gas temperature Ta, and hence a relation of the water quantity control ratio t and the exhaust-gas temperature Ta as illustrated in FIG. 8 is obtained. Therefore, the water quantity control ratio t can be controlled by controlling either the current I, the exhaust-gas pressure Pa, the exhaust-gas flow rate Qa, or the exhaust-gas temperature Ta. Needless to say, the water quantity control ratio t can also be controlled by controlling a combination of two or more of the current I, the exhaust-gas pressure Pa, the exhaust-gas flow rate Qa, and the exhaust-gas temperatures Ta. These relations stand when the anode side and cathode side are operated under completely identical conditions. These relations also have a tendency to stand when the anode side and the cathode side are under separate conditions.

Therefore, the operation control of the fuel cell 30 at Step S112 in the operation control routine of FIG. 3 can be conducted by controlling one or two or more of the current I, the exhaust-gas pressures Pa and Pc, the exhaust-gas flow rates Qa and Qc, and the exhaust-gas temperatures Ta and Tc. The factor to actually be controlled can be determined according to the operating state of the fuel cell 30 and driving condition of the load 54. For example, if one wishes not to alter the current I applied to the load 54, any factor other than the current I may be controlled. For control of the fuel cell 30 at start-up, as illustrated in FIG. 9, all that is needed is to control the current I so that the water quantity control ratio t becomes equal to a value of 1 as the exhaust-gas temperatures Ta and Tc increase. As understood from FIG. 9, by virtue of this control the fuel cell 30 is started smoothly.

Note that control of each factor can be conducted as follows. The current I can be controlled by the current controller 52 and the exhaust-gas pressures Pa and Pc can be controlled by adjusting the opening -of the gas pressure control valves 28 and 29. Also, the exhaust-gas flow rates Qa and Qc can be controlled by adjusting the opening of the flow rate control valves 26 and 27 and the exhaust-gas temperatures Ta and Tc can be controlled by controlling the flow rate of the cooling medium with the circulating pump 44. Therefore, all that is needed is to control the current controller 52, the flow rate control valves 26 and 27, the gas pressure control valves 28 and 29, and/or the circulating pump 44 in accordance with the operating state of the fuel cell 30 and the driving condition of the load 54.

According to the fuel cell system 20 of the embodiment described above, the operation of the fuel cell 30 can be controlled so as to be in an excellent operating state without humidifying the hydrogen-containing gas and the oxygen-containing gas based on the water quantity control ratio t. That is, by controlling the water quantity control ratio t to be within a range of 0.7 to 1.4, and preferably controlling the water quantity ratio t to be a value of 1, the fuel cell 30 can be operated in a high-performance state.

In the fuel cell 30 of the embodiment, the water quantity Qw is calculated, the saturated water vapor pressures Pwa and Pwc are calculated, the saturated water vapor contents Qwa and Qwc are calculated in the operation control routine of FIG. 3, and further, the water quantity control ratio t is calculated using these values. However, one may adopt a method whereby the water quantity control ratio t is calculated directly.

In the fuel cell system 20 of the embodiment, the operation of the fuel cell 30 is controlled in a direction such that the deviation Δt between the water quantity control ratio t and a value of 1 is canceled out. However, operation of the fuel cell 30 may be controlled so that the water quantity control ratio t is within a range of 0.7 to 1.4.

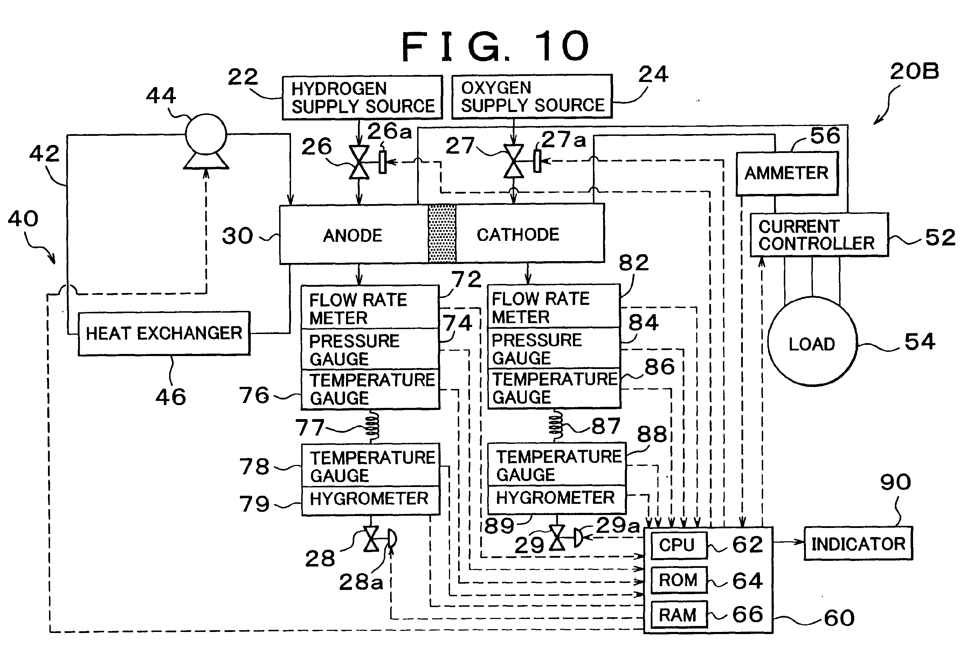

Next, a fuel cell system 20B as the second embodiment according to the invention will hereinafter be described. FIG. 10 is a block diagram showing an outline of the configuration of the fuel cell system 20B of the second embodiment. The fuel cell system 20B of the second embodiment, as shown in FIG. 10, has the same configuration as the fuel cell system 20 of the first embodiment except in that the following are provided: heaters 77 and 87 for heating the exhaust gases of the anode side and the cathode side; temperature gauges 78 and 88 for detecting temperatures Tha, Thc of heated exhaust gases; and hygrometers 79 and 89 for detecting relative humidities $\rho ha$ and $\rho hc$ of the heated exhaust gases. To avoid redundant description, in the configuration of the fuel cell system 20B of the second embodiment, constituent members thereof that are the same as their counterparts of the fuel cell system 20 of the first embodiment are denoted with the same reference numerals and the descriptions for these members are omitted. Note that the heaters 77 and 87 with which the fuel cell system 20B of the second embodiment is provided are constructed as ribbon heaters attached to the exhaust gas piping.

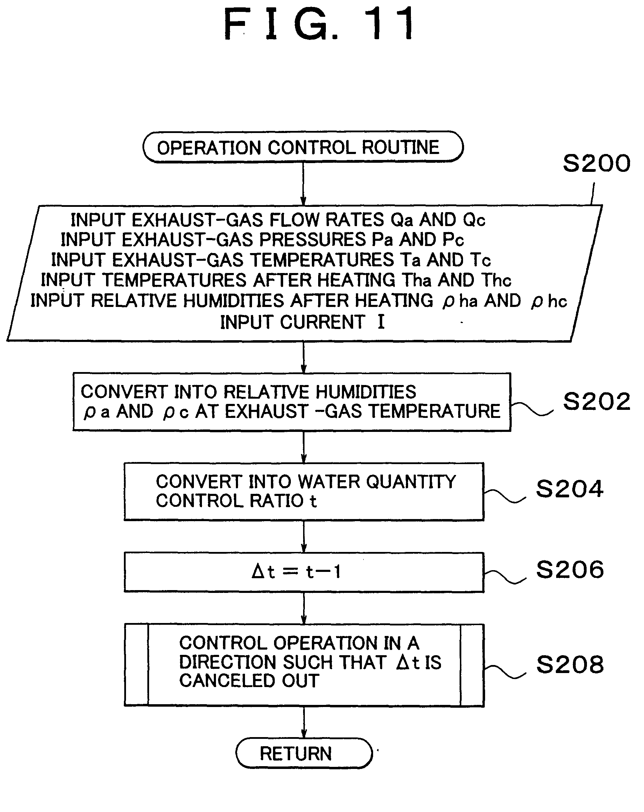

In the fuel cell system 20B of the second embodiment as configured in this way, the operation control routine illustrated by FIG. 11 is executed by the electronic control unit 60. When this routine is executed, the CPU 62 of the electronic control unit 60 first executes processing for reading the following data: the exhaust-gas flow rates Qa and Qc from the flow rate meters 72 and 82; the exhaust-gas pressures Pa and Pc from the pressure gauges 74 and 84; the exhaust-gas temperatures Ta and Tc from the temperature gauges 76 and 86; the exhaust-gas temperatures Tha and Thc after heating from the temperature gauges 78 and 88; the relative humidities $\rho ha$ and $\rho hc$ of the exhaust gases after heating from the hygrometers 79 and 89; and the current I from the ammeter 56. Then the CPU 62 conducts processing such that the readout relative humidities $\rho ha$ and $\rho hc$ of the exhaust gases after heating are converted into relative humidities $\rho a$ and $\rho c$ at the exhaust-gas temperatures Ta and Tc (Step S202). Here, the reason for heating the exhaust gases with heaters 77 and 87, detecting the relative humidities $\rho ha$ and $\rho hc$, and converting these values into the relative humidities $\rho a$ and $\rho c$ at the exhaust-gas temperatures Ta and Tc is to detect when the water quantity in the exhaust gas exceeds the saturated water vapor content and becomes mist, that is, to vaporize the water in a mist state by heating so as to detect it as relative humidity. Therefore, there may be cases in which the converted relative humidities $\rho a$ and $\rho c$ at the exhaust-gas temperatures Ta and Tc reach values exceeding 100 percent.

Next, the converted relative humidities $\rho a$ and $\rho c$ at the exhaust-gas temperatures Ta and Tc are converted into the water quantity control ratio t (Step S204). Now, suppose that the anode side and the cathode side are operated under the same conditions and a formula $\rho a = \rho b$ stands. When the hydrogen-containing gas supplied by the hydrogen supply source 22 and the oxygen-containing gas supplied by the oxygen supply source 24 are not humidified with humidifiers, the water is exhausted as water vapor in the exhaust gas, therefore the water quantity Qw equals the water vapor content in the exhaust gas. Since the relative humidity is a ratio of the water vapor content to the saturated water vapor content in the exhaust gas at that temperature and the water quantity control ratio t is a ratio of the water quantity Qw to the saturated water vapor content in the exhaust gas, if the water quantity Qw equals the water vapor content in the exhaust gas in the case of non-humidifying operation, the water quantity control ratio t then becomes equal to the relative humidity.

Therefore, conversion of the relative humidities $\rho a$ and $\rho b$ into the water quantity control ratio t in Step S204 can be done in such way that the relative humidities $\rho a$ and $\rho b$ are divided proportionally to a ratio of the flow rates and added. That is, the conversion can be calculated by the following formula (8).

$$t = (\rho a \times Qc + \rho c \times Qc) / (Qc + Qc) \qquad (8)$$

After the calculation of the water quantity control ratio t, the CPU 62 calculates the deviation $\Delta t$ between the water quantity control ratio t and a value of 1 (Step S206), controls the operation of the fuel cell 30 in a direction such that the deviation $\Delta t$ is canceled out (Step S208), and terminates this routine. The reason to control the operation of the fuel cell 30 in a direction such that the deviation $\Delta t$ is canceled out was described above.

According to the fuel cell system 20B of the second embodiment described above, the fuel cell 30 can be controlled to operate in an excellent state without humidifying the hydrogen-containing gas and the oxygen-containing gas according to the relative humidities of the exhaust gases of the fuel cell 30. That is, by controlling the water quantity control ratio specified as the relative humidity to be within a range of 0.7 to 1.4, and preferably by controlling the relative humidity to be equal to a value of 1 (relative humidity being 100 percent), the fuel cell 30 can be operated in a high-performance state.

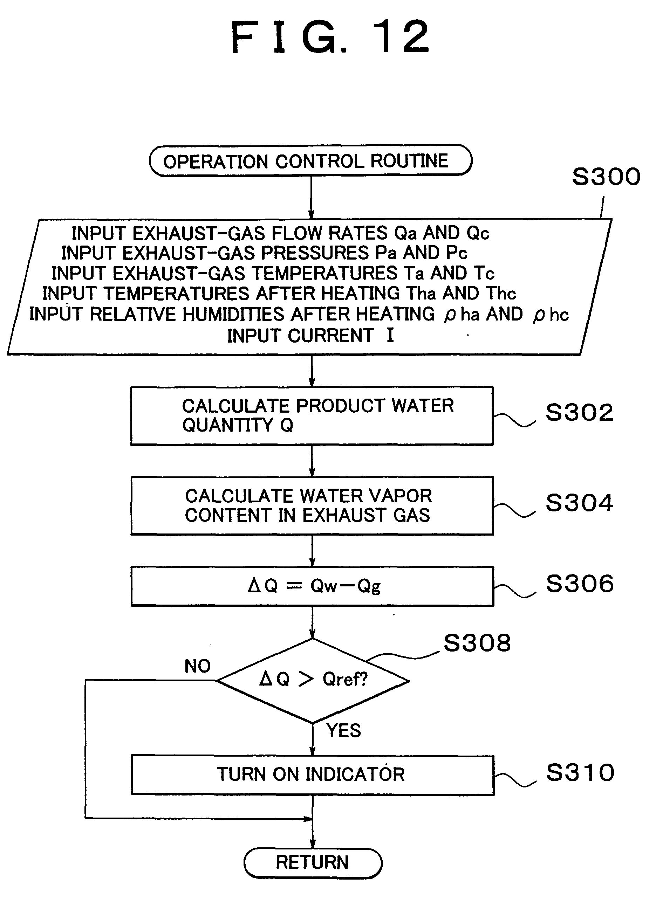

As described above, when the fuel cell 30 is operated without humidifying the hydrogen-containing gas and the oxygen-containing gas, the water quantity Qw and the water vapor content Qg in the exhaust gas become equal. Therefore, a system abnormality can also be judged by comparing the water quantity Qw and'the water vapor content Qg and checking which is larger. FIG. 12 is a flowchart showing one example of an abnormality judgment processing routine that is executed by the electronic control unit 60 of the fuel cell system 20 of the first embodiment or the fuel cell system 20B of the second embodiment.

When this processing routine is executed, the CPU 62 of the electronic control unit 60 first reads the exhaust-gas flow rates Qa and Qc, the exhaust-gas pressures Pa and Pc, the exhaust-gas temperatures Ta and Tc, the exhaust-gas temperatures after heating Tha and Thc, the relative humidities after heating ρha and ρhc, and the current I (Step S300), calculates the water quantity Qw (Step S302), and calculates the water vapor content Qg (Step S304). Then, the CPU 62 calculates the water quantity Qw, the water vapor content Qg, and the deviation ΔQ (Step S306), and compares the absolute value of the deviation ΔQ with a threshold value Qref (Step S308). Here, the threshold value Qref is set as an allowable range for the deviation between the water quantity Qw and the water vapor content Qg, and specified according to the scale and the kind of the fuel cell 30 and so forth.

When the absolute value of the deviation ΔQ is larger than the threshold Qref, the CPU 62 judges an abnormality and turns on the indicator 90 (Step S310). When the absolute value of the deviation ΔQ is equal to or less than the threshold value Qref, the CPU 62 judges that there is no abnormality, and subsequently terminates this routine. Here, if the water quantity Qw is larger than the water vapor content Qg and the absolute value of the deviation ΔQ becomes larger than the threshold value Qref, it is most likely that there is water leakage from piping, etc., or one of the measuring instruments is broken. Moreover, if the water quantity Qw is less than the water vapor content Qg and the absolute value of the deviation ΔQ becomes larger than the threshold Qref, it is most likely that one of the measuring instruments is broken. In the abnormality judgment routine of the embodiment, such abnormalities are judged, and if an abnormality is judged, the CPU 62 turns on the indicator 90 to inform the operator of the abnormality. In this way, the abnormality judgment routine of the embodiment can judge a system abnormality based on the water quantity Qw and the water vapor content Qg. In addition, since the CPU 62 turns on the indicator 90, the operator can promptly recognize the system abnormality.

In the abnormality judgment processing routine of the embodiment, the absolute value of the deviation ΔQ between the water quantity Qw and the water vapor content Qg is compared with the threshold Qref. However, the deviation ΔQ may also be compared with a positive value of the threshold and a negative value of the threshold. In this case, a magnitude of the positive value of the threshold and a magnitude of the negative value of the threshold are allowed to be different.

The invention has heretofore been described with reference to embodiments. However, it is apparent that the invention is not limited to these embodiments and that the invention can be modified without departing from the scope and spirit thereof.

A fuel cell system calculates a water quantity Qw produced by a fuel cell (30) from an output current I of the fuel cell (30)(S102), and at the same time calculates saturated water vapor contents Qwa and Qwc in exhaust gases based on exhaust-gas flow rates Qa and Qc, exhaust-gas pressures Pa and Pc, and exhaust-gas temperatures Ta and Tc of the anode side and the cathode side, respectively (S106). Then the system calculates a water quantity control ratio that is defined as t = Qw / (Qwa + Qwc) (S108) and controls operation of the fuel cell (30) by controlling one or more of the exhaust-gas flow rates Qa and Qc, the exhaust-gas pressures Pa and Pc, the exhaust-gas temperatures Ta and Tc, and a current I of the anode side and the cathode side in a direction such that a deviation Δt between the water quantity control ratio t and a value of one is canceled out (S112). By this control, the fuel cell (30) can be operated with excellent performance, without humidifying gases of the anode side and the cathode side. [FIG.3]

**Claims**

1.  A polymer electrolyte fuel cell system **characterized by** comprising:

    water quantity detection means (S102) for detecting a quantity of water produced by the fuel cell (30);
    saturated water vapor content detection means (S106) for detecting a saturated water.vapor content in an exhaust gas of the fuel cell (30);
    water quantity control ratio calculation means (S108) for calculating a water quantity control ratio which is defined as a ratio of the quantity of water detected by the water quantity detection means (S102) to the saturated water vapor content in the exhaust gas detected by the exhaust-gas saturated water vapor content detection means (S106); and
    operation control means (S112) for controlling an operating state of the fuel cell (30) such that the water quantity control ratio is within a predetermined range.

2.  The fuel cell system according to claims 1, **characterized in that**:
    the water quantity detection means (S102) detects the water quantity based on an output current of the fuel cell (30).

3.  A fuel cell system according to claims 1 or 2, **characterized in that** the saturated water vapor content detection means (S106) comprises:

pressure detection means (74) for detecting a pressure of the exhaust gas;
temperature detection means (76) for detecting a temperature of the exhaust gas;
flow rate detection means (72) for detecting a flow rate of the exhaust gas; and
calculating means (60) which calculates the saturated water vapor content in the exhaust gas based on the pressure of the exhaust gas, temperature of the exhaust gas, and flow rate of the exhaust gas.

4. A polymer electrolyte fuel cell system **characterized by** comprising:

relative humidity detection means (S202) for detecting a relative humidity of an exhaust gas of the fuel cell (30); and
operation control means (S208) for controlling an operating state of the fuel cell such that a water quantity control ratio equivalent to the relative humidity is within a predetermined range.

5. The fuel cell system according to any one of claims 1 to 4, **characterized in that**
the operation control means (S112) controls the operating state of the fuel cell such that the water quantity control ratio is within a range which includes a value of one as the predetermined range.

6. The fuel cell system according to claim 5, **characterized in that**
the operation control means (S208) controls the operating state of the fuel cell such that the water quantity control ratio is within a range of 0.7 to 1.4 as the predetermined range.

7. The fuel cell system according to claims 5 or 6, **characterized in that**
the operation control means (S208) controls the operating state of the fuel cell (30) such that the water quantity control ratio becomes equal to a value of one.

8. The fuel cell system according to any one of claims 1 to 7, **characterized by** further comprising:

condition alteration means (26, 27, 28, 29, 44, 52) for altering at least one condition of a flow rate of the exhaust gas, a pressure of the exhaust gas, a temperature of the exhaust gas, and an output current of the fuel cell as the operating state of the fuel cell (30),
in that
the operation control means (S112, S208) controls the condition alteration means (26, 27, 28, 29, 44, 52) which alters at least one condition of the flow rate of the exhaust gas, the pressure of the exhaust gas, the temperature of the exhaust gas, and the output current of the fuel cell such that the water quantity control ratio is within a predetermined range.

9. A polymer electrolyte fuel cell system **characterized by** comprising:

water quantity detection means (S302) for detecting a quantity of water produced by the fuel cell (30);
water vapor content detection means (S304) for detecting a water vapor content in exhaust gas of the fuel cell (30); and
abnormality judgment means (S308) for judging a system abnormality based on the quantity of water detected by the water quantity detection means (S302) and the water vapor content in the exhaust gas detected by the exhaust-gas water vapor content detection means (S304).

10. The fuel cell system according to claim 9, **characterized in that**
the abnormality judgment means (S308) judges the system to be abnormal when a deviation between the quantity of water and the water vapor content in the exhaust gas is not within a predetermined range.

11. The fuel cell system according to claims 9 or 10, **characterized by** further comprising
alarm output means (S310) for outputting an alarm when the abnormality judgment means (S308) judges a system abnormality.

12. A method for operating a polymer electrolyte fuel cell, **characterized by** comprising a step of
controlling an operating state of the fuel cell such that a water quantity control ratio as a ratio of a quantity of water produced by the fuel cell to a saturated water vapor content in exhaust gas of the fuel cell (30) is within a predetermined range.

**13.** A method for operating a polymer electrolyte fuel cell, **characterized by** comprising of a step of controlling an operating state of the fuel cell such that a water quantity control ratio equivalent to a relative humidity of an exhaust gas of the fuel cell (30) is within a predetermined range.

**14.** The method according to claims 12 or 13, **characterized in that** the operating state of the fuel cell (30) is controlled such that the water quantity control ratio is within a range of 0.7 to 1.4.

**15.** The method according to claim 14, **characterized in that** the operating state of the fuel cell (30) is controlled such that the water quantity control ratio becomes equal to a value of one.

# FIG. 1

HYDROGEN SUPPLY SOURCE — 22

OXYGEN SUPPLY SOURCE — 24

44

42

40

26 — 26a

27 — 27a

56

AMMETER

30 — ANODE   CATHODE

CURRENT CONTROLLER — 52

HEAT EXCHANGER

46

FLOW RATE METER — 72

PRESSURE GAUGE — 74

TEMPERATURE GAUGE

76

FLOW RATE METER — 82

PRESSURE GAUGE — 84

TEMPERATURE GAUGE

86

LOAD — 54

28 — 28a

29 — 29a

90

CPU — 62

INDICATOR

ROM — 64

RAM — 66 — 60

12

EP 1 132 986 A2

# F I G. 2

# F I G. 3

OPERATION CONTROL ROUTINE

INPUT EXHAUST-GAS FLOW RATES $Qa$ AND $Qc$
INPUT EXHAUST-GAS PRESSURES $Pa$ AND $Pc$
INPUT EXHAUST-GAS TEMPERATURES $Ta$ AND $Tc$
INPUT CURRENT $I$ ⎯ S100

CALCULATE PRODUCT WATER QUANTITY ⎯ S102

CALCULATE SATURATED WATER VAPOR PRESSURE $Pwa$ AND $Pwc$ ⎯ S104

CALCULATE SATURATED WATER VAPOR CONTENT IN EXHAUST GAS $Qwa$ AND $Qwc$ ⎯ S106

CALCULATE WATER QUANTITY CONTROL RATIO $t$ ⎯ S108

$\Delta t = t - 1$ ⎯ S110

CONTROL OPERATION IN A DIRECTION SUCH THAT $\Delta t$ IS CANCELED OUT ⎯ S112

RETURN

# FIG. 4

# FIG. 5

# F I G. 6

WATER QUANTITY CONTROL RATIO t

0

EXHAUST–GAS FLOW RATE Qa

# F I G. 7

WATER QUANTITY CONTROL RATIO t

0

EXHAUST–GAS PRESSURE Pa

$$-\frac{I}{2F \cdot Qg}$$

# F I G. 8

WATER QUANTITY
CONTROL RATIO t

0

EXHAUST-GAS
TEMPERATURE T

# F I G. 9

[V]

[A/cm²]

GENERATED
VOLTAGE[V]

CURRENT
DENSITY[A/cm²]

OPERATING TEMPERATURE[°C]

17

# F I G. 10

EP 1 132 986 A2

# F I G. 11

OPERATION CONTROL ROUTINE

INPUT EXHAUST-GAS FLOW RATES Qa AND Qc
INPUT EXHAUST-GAS PRESSURES Pa AND Pc
INPUT EXHAUST-GAS TEMPERATURES Ta AND Tc
INPUT TEMPERATURES AFTER HEATING Tha AND Thc
INPUT RELATIVE HUMIDITIES AFTER HEATING $\rho$ ha AND $\rho$ hc
INPUT CURRENT I

S200

CONVERT INTO RELATIVE HUMIDITIES
$\rho$ a AND $\rho$ c AT EXHAUST -GAS TEMPERATURE

S202

CONVERT INTO WATER QUANTITY
CONTROL RATIO t

S204

$\Delta t = t - 1$

S206

CONTROL OPERATION IN A
DIRECTION SUCH THAT $\Delta t$ IS
CANCELED OUT

S208

RETURN

19

# F I G. 12

```
        ( OPERATION CONTROL ROUTINE )
                       |                    S300
                       v
  INPUT EXHAUST-GAS FLOW RATES Qa AND Qc
  INPUT EXHAUST-GAS PRESSURES Pa AND Pc
  INPUT EXHAUST-GAS TEMPERATURES Ta AND Tc
  INPUT TEMPERATURES AFTER HEATING Tha AND Thc
  INPUT RELATIVE HUMIDITIES AFTER HEATING ρha AND ρhc
  INPUT CURRENT I
                       |
                       v
       CALCULATE PRODUCT WATER          S302
          QUANTITY Q
                       |
                       v
       CALCULATE WATER VAPOR            S304
       CONTENT IN EXHAUST GAS
                       |
                       v
          ΔQ = Qw−Qg                    S306
                       |
                       v              S308
      NO  /  ΔQ > Qref? \
      +--<               >
      |    \            /
      |            | YES
      |            v
      |    TURN ON INDICATOR            S310
      |            |
      +----------->|
                   v
              ( RETURN )
```

$S300$

$\Delta Q = Qw - Qg$

$\Delta Q > Qref?$